(19) Europäisches Patentamt / European Patent Office / Office européen des brevets

(11) **EP 2 288 016 B1**

(12) # EUROPÄISCHE PATENTSCHRIFT

(45) Veröffentlichungstag und Bekanntmachung des Hinweises auf die Patenterteilung:
**26.09.2012 Patentblatt 2012/39**

(51) Int Cl.:
***H02P 9/00*** *(2006.01)* ***H02P 9/42*** *(2006.01)*
***F03D 7/04*** *(2006.01)* ***F03D 9/00*** *(2006.01)*
***H02J 3/38*** *(2006.01)*

(21) Anmeldenummer: **10007995.3**

(22) Anmeldetag: **30.07.2010**

(54) **Windenergieanlage mit veränderbarer Drehzahlkennlinie**

Wind energy assembly with adjustable speed characteristics curve

Eolienne dotée d'une courbe caractéristique de la vitesse de rotation modifiable

(84) Benannte Vertragsstaaten:
**AL AT BE BG CH CY CZ DE DK EE ES FI FR GB GR HR HU IE IS IT LI LT LU LV MC MK MT NL NO PL PT RO SE SI SK SM TR**

(30) Priorität: **12.08.2009 DE 102009037238**

(43) Veröffentlichungstag der Anmeldung:
**23.02.2011 Patentblatt 2011/08**

(73) Patentinhaber: **REpower Systems SE**
**22297 Hamburg (DE)**

(72) Erfinder: **Krüger, Thomas**
**24784 Westerrönfeld (DE)**

(74) Vertreter: **Glawe, Delfs, Moll**
**Patent- und Rechtsanwälte**
**Rothenbaumchaussee 58**
**20148 Hamburg (DE)**

(56) Entgegenhaltungen:
**EP-A2- 0 688 095** **WO-A1-2010/010476**
**US-A- 4 980 629** **US-A1- 2007 069 522**

- **FELTES C ET AL: "Variable Frequency Operation of DFIG based Wind Farms connected to the Grid through VSC-HVDC Link", POWER ENGINEERING SOCIETY GENERAL MEETING, 2007. IEEE, IEEE, PI, 1. Juni 2007 (2007-06-01), Seiten 1-7, XP031118453, ISBN: 978-1-4244-1296-9**
- **PARK J W ET AL: "Control of active power in a doubly-fed induction generator taking into account the rotor side apparent power", POWER ELECTRONICS SPECIALISTS CONFERENCE, 2004. PESC 04. 2004 IEEE 35TH ANNUAL, AACHEN, GERMANY 20-25 JUNE 2004, PISCATAWAY, NJ, USA,IEEE, US, Bd. 3, 20. Juni 2004 (2004-06-20), Seiten 2060-2064, XP010739588, ISBN: 978-0-7803-8399-9**

Anmerkung: Innerhalb von neun Monaten nach Bekanntmachung des Hinweises auf die Erteilung des europäischen Patents im Europäischen Patentblatt kann jedermann nach Maßgabe der Ausführungsordnung beim Europäischen Patentamt gegen dieses Patent Einspruch einlegen. Der Einspruch gilt erst als eingelegt, wenn die Einspruchsgebühr entrichtet worden ist. (Art. 99(1) Europäisches Patentübereinkommen).

EP 2 288 016 B1

Printed by Jouve, 75001 PARIS (FR)

## Beschreibung

Die Erfindung betrifft eine Windenergieanlage mit einem Windrotor, einem davon angetriebenen doppelt gespeisten Asynchrongenerator mit einem Umrichter, der einen generatorseitigen Wechselrichter und einen netzseitigen Wechselrichter umfasst, sowie einer Steuerung, die dazu ausgebildet ist, zu einer Betriebsdrehzahl ein Betriebsmoment zu bestimmen, wobei das Betriebsmoment ein Maximaldrehmoment nicht überschreitet, und die weiter einen Netzfrequenzdetektor aufweist.

Moderne Windenergieanlagen sind drehzahlvariabel ausgeführt und dazu mit einem Umrichter versehen. Üblicherweise weisen sie einen doppelt gespeisten Asynchrongenerator auf, dessen Stator fest an das Netz angeschlossen ist und der Rotor über den Umrichter mit dem Netz verbunden ist. Dies ermöglicht einen Betrieb nicht nur mit einer solchen Drehzahl des Generators, die der Netzfrequenz entspricht, sondern auch eine niedrigere Drehzahl als sie der Netzfrequenz (bzw. der dadurch bestimmten Synchrondrehzahl) entspricht oder einem Betrieb mit einer höheren Drehzahl, als sie der Synchrondrehzahl entspricht. Die jeweilige Abweichung der tatsächlichen Drehzahl von der Synchrondrehzahl, die durch die Netzfrequenz bestimmt ist, wird als Schlupf bezeichnet. Üblich für moderne Windenergieanlagen sind Schlupfwerte von ± 30% und teilweise auch mehr. Die Windenergieanlage kann damit über einen weiten Drehzahlbereich betrieben werden.

Die für die Bestimmung des Schlupfes entscheidende Synchrondrehzahl ist beim praktischen Betrieb am realen Netz nicht konstant, sondern unterliegt denselben Schwankungen wie die Netzfrequenz. Tritt bspw. im Netz eine Überfrequenz auf, so verschiebt sich dementsprechend die Synchrondrehzahl nach oben, und umgekehrt. Sollten die Schlupfwerte dadurch zu hoch oder zu niedrig werden, so besteht die Gefahr von Überlastung und der Beschädigung von Komponenten der Windenergieanlage. Um dies zu vermeiden, sind verschiedene Abhilfemaßnahmen aus dem Stand der Technik bekannt.

Eine erste Maßnahme besteht darin, bei der Auslegung der Komponenten der Windenergieanlage auf den jeweils ungünstigsten Extremfall abzustellen, d. h. die maximal zulässige Netzfrequenzabweichung zu berücksichtigen. Dies führt letztlich zu einer geplanten Überdimensionierung der Komponenten, und ist daher entsprechend aufwendig in Bezug auf die Herstellungskosten. Weiter führen die auf den ungünstigsten Fall abgestimmten Kennlinien bei Nominalfrequenz zu einem suboptimalen Betrieb, woraus Ertragseinbußen resultieren. Im Übrigen ist diese Auslegung auf den Extremfall noch gar nicht ausreichend, sondern weiter ist eine Anpassung des stationären Drehzahlbereichs an die Netzfrequenz erforderlich, um beim Auftreten von tatsächlicher Unterfrequenz eine Überlastung bei zu hohem Rotorschlupf, insbesondere bei höherer Last, zu vermeiden.

Einen anderen Weg zur Anpassung der Kennlinien zeigt die US 2007/069522 A1 auf. Abhängig von der gemessenen Netzfrequenz wird bestimmt, ob ein Über- oder Unterfrequenzzustand besteht, um je nachdem die Drehzahl-/Drehmomentkennlinie zum Synchronpunkt hin zu verschieben. Damit wird der tatsächlich auftretende Schlupf verkleinert. Es wird also die gesamte Kennlinie abhängig von der tatsächlichen Netzfrequenz adaptiert. Nachteilig daran ist, dass diese Adaptation über den gesamten Betriebsbereich wirksam ist, wodurch es ebenfalls zu Ertragseinbußen durch unnötige Reduktion kommen kann, wie bereits vorstehend bei der statischen Auslegung auf den Extremfall beschrieben. Weiter gibt es für bestimmte Betriebszustände nur einen unzureichenden Schutz, wie bspw. für die Kombination von Überfrequenz und hoher Last. Genau für diesen kritischen Betriebsfall kann ein ausreichender Schutz nicht gewährleistet werden.

Ausgehend von dem zuletzt genannten Stand der Technik liegt der Erfindung die Aufgabe zu Grunde, eine verbesserte Windenergieanlage und ein Betriebsverfahren dafür anzugeben, welches die oben genannten Nachteile verringert.

Die erfindungsgemäße Lösung liegt in den Merkmalen der unabhängigen Ansprüche. Vorteilhafte Weiterbildungen sind Gegenstand der abhängigen Ansprüche.

Bei einer Windenergieanlage mit einem Windrotor, einem davon angetriebenen doppelt gespeisten Asynchrongenerator mit einem Umrichter, der einen generatorseitigen Wechselrichter und einen netzseitigen Wechselrichter umfasst, und einer Steuerung, die dazu ausgebildet ist, zu einer Betriebsdrehzahl ein Betriebsmoment zu bestimmen, wobei das Betriebsmoment einen Maximaldrehmoment nicht überschreitet, ist erfindungsgemäß vorgesehen ein frequenzadaptiver Drehmomentbegrenzer mit einem Klassifikator für eine Über- und/oder Unterfrequenz außerhalb eines Toleranzbands, ein Momentschieber, der dazu ausgebildet ist, das Maximaldrehmoment bei dem Auftreten von Frequenzabweichungen zu verringern, und ein Inhibitor, der den Momentschieber bei Unterfrequenz blockiert, sowie ein frequenzabhängiger Drehzahlbegrenzer, an dessen Eingang ein Signal für die Frequenzabweichung angelegt ist und mit dem Klassifikator derart zusammenwirkt, dass die untere Grenzdrehzahl nur bei Überfrequenz erhöht und die obere nur bei Unterfrequenz erniedrigt wird.

Die Erfindung beruht auf dem Gedanken, eine Anpassung des Betriebsmoments nicht über den gesamten Betriebsbereich hinweg vorzunehmen, sondern die Anpassung nur in Bezug auf die zulässigen Grenzwerte, insbesondere dem Maximalwert, durchzuführen, wobei diese Anpassung aber nicht statisch, sondern dynamisch in Abhängigkeit von der tatsächlich auftretenden Frequenzabweichung erfolgt. Damit können die bisher gegensätzlichen Vorteile der bisher bekannten Lösungsmöglichkeiten miteinander verknüpft, und dadurch ihre jeweiligen Nachteile vermindert werden. Insbesondere wird durch die dynamische Begrenzung der Nachteil der stets auftretenden Ertragseinbuße vermieden, wie sie bei einer Auslegung auf den ungünstigsten Fall bisher unvermeidlicherweise auftrat. Indem nur der Grenzwert und nicht die gesamte Kennlinie über den ganzen Betriebsbereich hinweg verschoben wird, können die Verluste weiter verringert werden.

Die Erfindung wirkt auf zweierlei Weise. Zum einen wird der zulässige Drehzahlbereich an die jeweilige Änderung der Netzfrequenz angepasst. Damit ist sichergestellt, dass der zulässige Betriebsbereich des Umrichters nicht verlassen wird. Bei dem Auftreten von Überfrequenz wird daher die Untergrenze des zulässigen Drehzahlbereichs angehoben, um den Schlupf innerhalb der Betriebsgrenzen des Umrichters zu halten. Die Maximalgrenze des zulässigen Betriebsbereichs braucht nicht verändert zu werden, da sich hier aufgrund der Überfrequenz ohnehin geringere Schlupfwerte ergeben.

Dementsprechend erfolgt bei dem Auftreten von Unterfrequenz eine Veränderung der Maximalgrenze des zulässigen Drehzahlbereichs, und zwar wird diese so weit abgesenkt, dass der maximale Schlupf nicht unterschritten wird. In der Praxis geschieht dies zweckmäßigerweise dadurch, dass die Absenkung proportional zur Netzfrequenzabweichung durchgeführt wird. Die Minimaldrehzahl des zulässigen Drehzahlbereichs braucht nicht angepasst zu werden, da sich hier ohnehin geringere Schlupfwerte bei Unterfrequenz ergeben. Mit dieser Beschränkung auf die Veränderung von jeweils nur einer Maximalgrenze erfolgt einerseits eine Absicherung gegenüber unzulässig großen Werten beim Auftreten entsprechender extremer Betriebsbedingungen, wobei andererseits die Betriebsweise im Normalzustand unverändert bleibt. Ertragseinbußen sind daher im Normalbetrieb nicht zu befürchten.

Der zweite Aspekt besteht darin, zusätzlich zur Anpassung des zulässigen Drehzahlbereichs die Drehmomentgrenze, genauer gesagt das maximal zulässige Drehmoment, anzupassen. Dazu ist der Momentschieber vorgesehen. Dieser verändert in Abhängigkeit von der tatsächlichen Drehzahl und der ermittelten Überfrequenz das zulässige Maximaldrehmoment. Damit wird erreicht, dass auch bei dem Auftreten von Überfrequenzen das schlupfabhängige maximal zulässige Drehmoment nicht überschritten wird. Erfindungsgemäß wird bei dem Auftreten von Unterfrequenz die Anpassung durch den Inhibitor blockiert, um eine Anhebung des maximalen Drehmoments bei Unterfrequenz zu verhindern, die zur Überlastung anderer Komponenten führen könnte. Es erfolgt hier also eine gewollt asymmetrische Anpassung, nämlich nur bei dem Auftreten von Überfrequenz, aber keine Anpassung bei dem Auftreten von Unterfrequenz. Indem wiederum nur der Maximalwert, nicht aber der Betrieb bei Nominalbedingungen beeinflusst wird, ergeben sich bei der Erfindung keine Ertragseinbußen gegenüber dem Normalbetrieb.

Vorzugsweise wirkt der Momentschieber mit einem Drehzahlmodifikator zusammen, der dazu ausgebildet ist, aus der tatsächlichen Betriebsdrehzahl ein um einen von der Frequenzabweichung abhängigen Korrekturwert verändertes modifiziertes Drehzahlsignal zu generieren, welches an ein drehzahlabhängiges Maximaldrehmomentglied angelegt ist, das das Maximaldrehmoment ausgibt. Dies eignet sich insbesondere für Ausführungsformen, bei denen die Bestimmung des zulässigen Maximaldrehmoments in Abhängigkeit von der Drehzahl erfolgt, bspw. durch eine Look-up-Tabelle oder ein Kennlinienglied. Um eine Veränderung der Tabelle oder des Kennlinienglieds zu vermeiden, welche einen erheblichen Aufwand bei der Programmierung und Abstimmung bedeuten könnte, wird das an sich unveränderte Kennlinienglied bzw. die Tabelle mit einem veränderten (modifizierten) Drehzahlsignal beaufschlagt. Hierbei erfolgt das Modifizieren des Drehzahlsignals in Abhängigkeit von der Frequenzabweichung. Liegt die Frequenz auf dem Nominalwert, so wird das Drehzahlsignal nicht verändert; ergibt sich eine Frequenzabweichung als Überfrequenz, so wird das Drehzahlsignal entsprechend vermindert, und bei dem Auftreten von Unterfrequenz entsprechend erhöht. Mit diesem Kunstgriff wird erreicht, dass das modifizierte Drehzahlsignal derjenigen Drehzahl (bzw. Frequenz) entspricht, welche von dem Umrichter als Differenz zwischen tatsächlicher Drehzahl des Rotors und der durch die aktuelle Netzfrequenz definierten Synchrondrehzahl auszugleichen ist. Damit wird der Umrichter nicht nur unabhängig von der Netzfrequenz optimal ausgenutzt, sondern auch vor Überlastung geschützt.

Mit Vorteil weist der Drehzahlmodifikator einen Eingang für eine zulässige Maximalfrequenz auf, und es ist ein Sättigungsglied vorgesehen, welches die Drehzahlmodifikation auf die zulässige Maximalfrequenz begrenzt. Damit wird eine Überanpassung verhindert, welche zu Schäden an anderen Komponenten der Anlage führen könnte. Dabei ist das Sättigungsglied zweckmäßigerweise so ausgebildet, dass als Untergrenze ein Wert für die Nennfrequenz und als Obergrenze ein Wert für die maximal zulässige Netzfrequenz angelegt ist.

Vorzugsweise ist der Klassifikator so ausgebildet, dass die Drehzahlmodifikation bei Volllast inhibiert ist. Bei Volllast besteht die Gefahr einer Überlastung im wesentlichen nicht, außer in außergewöhnlichen Betriebsbedingungen wie bei Überdrehzahlen im Fall von Böen. Mit der Inhibierung kann so bei Volllast das Erreichen des vollen Ertrags sichergestellt werden.

Weiter kann vorgesehen sein, dass das Drehzahlmodifizierglied dazu ausgebildet ist, das modifizierte Drehzahlsignal aus der realen Drehzahl zu bilden mit dem Verhältnis aus Nominalnetzfrequenz zu tatsächlicher Netzfrequenz, ggf. unter Berücksichtigung des Sättigungsglieds. So kann auf besonders einfache und zweckmäßige Weise die Modifikation der Drehzahl erreicht werden.

Die Erfindung bezieht sich weiter auf ein entsprechendes Verfahren. Zur näheren Erläuterung wird auf vorstehende Ausführungen verwiesen.

Die Erfindung wird nachfolgend unter Bezugnahme auf die Zeichnung anhand von Ausführungsbeispielen näher erläutert. Es zeigen:

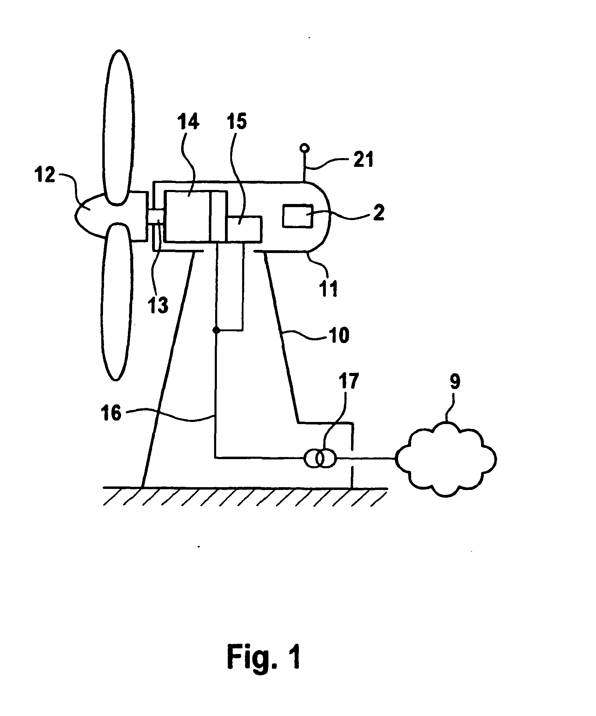

Fig. 1: eine Übersichtsdarstellung einer Windenergieanla- ge gemäß einem Ausführungsbeispiel der Erfindung;

Fig. 2: ein Blockdiagramm für die Steuerung einer Wind- energieanlage gemäß Fig. 1;

Fig. 3: ein Drehzahl-/Drehmomentdiagramm der Windenergie- anlage gemäß Fig. 1;

Fig. 4: ein Blockdiagramm für die Steuerung gemäß einem zweiten Ausführungsbeispiel; und

Fig. 5: ein alternatives Drehzahl-/Drehmomentdiagramm.

Die Windenergieanlage umfasst einen Turm 10, an dessen oberem Ende eine Gondel 11 in Azimutrichtung schwenkbeweglich angeordnet ist. An einer Stirnseite der Gondel 11 ist ein Windrotor 12 drehbar angeordnet. Dieser treibt über eine Rotorwelle 13 einen Generator an, welcher zur Umwandlung der mechanischen Energie in elektrische Energie ausgebildet ist. Beim dem dargestellten Ausführungsbeispiel handelt es sich um einen doppelt gespeisten Asynchrongenerator 14, der mit einem Umrichter 15 zusammenwirkt. Die von dem Generator 14 mit dem Umrichter 15 erzeugte elektrische Energie wird über eine Anschlussleitung 16 an einen Transformator 17 abgegeben, der am Fuß des Turms 10 der Windenergieanlage angeordnet ist. Dieser ist an ein Verteilungsnetz 9 angeschlossen, bei welchem es sich um ein internes Netz eines Windparks oder um ein öffentliches Energieübertragungsnetz handeln kann.

Weiter ist an der Gondel 11 eine Steuerung 2 angeordnet. Sie ist über (nicht dargestellte) Signalleitungen mit den verschiedenen Komponenten der Windenergieanlage verbunden und steuert diese. Die Steuerung 2 ist wiederum mit Führungssignalen beaufschlagt, die über eine drahtgebundene oder eine drahtlose Verbindungsstrecke 21 von einer übergeordneten Kontrollinstanz, insbesondere einer Windparksteuerung oder einer Netzleitstelle eines Energieversorgungsunternehmens, angelegt sind. Die Steuerung 2 ist dazu ausgebildet, je nach herrschenden Umgebungsbedingungen, insbesondere Windgeschwindigkeit, den Betriebspunkt der Windenergieanlage festzulegen, in welchem der Betrieb der Windenergieanlage erfolgt. Dies umfasst insbesondere die Funktionalität, abhängig von der gegenwärtigen Drehzahl ein Drehmoment T zu bestimmen und als elektrisches Sollmoment über den Umrichter 15 auf den Generator 14 zu geben. Eine weitere Funktionalität umfasst das Bestimmen eines maximal zulässigen Drehmoments $T_{max}$ in Abhängigkeit von der Drehzahl.

Bei Asynchrongeneratoren des doppelt gespeisten Typs, wie sie bei dem dargestellten Ausführungsbeispiel verwendet sind, tritt im Betrieb ein Schlupf s auf. Dieser Schlupf ist abhängig von der tatsächlichen Drehzahl n des Generators 14 und einer sogenannten Synchrondrehzahl $n_{sync}$, welche sich aus der Umlaufgeschwindigkeit des mit Netzfrequenz umlaufenden Felds ergibt. Als Schlupf bezeichnet man den Betrag der Drehzahlabweichung von der Synchrondrehzahl bezogen auf die Synchrondrehzahl:

$$s = \frac{n - n_{sync}}{n_{sync}}$$

Hierbei ist n die tatsächliche (mechanische) Drehzahl des Generators 14 und $n_{sync}$ die sich aus der Netzfrequenz ergebende Synchrondrehzahl. Wird die Windenergieanlage mit einer Drehzahl unterhalb der Synchrondrehzahl betrieben, so spricht man von untersynchronem Betrieb; wird die Windenergieanlage hingegen mit einer Drehzahl oberhalb der Synchrondrehzahl betrieben, so spricht man von übersynchronem Betrieb.

Die Abhängigkeit der Synchrondrehzahl $n_{sync}$ von der Netzfrequenz f bringt es mit sich, dass die Synchrondrehzahl sich bei Änderungen der Netzfrequenz ebenfalls ändert. So führt eine Netzfrequenz oberhalb der Nennfrequenz (Überfrequenz) dazu, dass die Synchrondrehzahl ansteigt, und dadurch bei konstant bleibender mechanischer Drehzahl im übersynchronen Bereich der Schlupf abnimmt, während hingegen bei untersynchronem Betrieb der Schlupf zunimmt. Umgekehrtes gilt bei Absinken der Netzfrequenz auf einen Wert unterhalb der Nennfrequenz (Unterfrequenz). Die entsprechende Verringerung der Synchrondrehzahl führt bei konstanter mechanischer Drehzahl im übersynchronen Betrieb zu einer Vergrößerung des Schlupfs, während im untersynchronen Betrieb der Schlupf abnimmt.

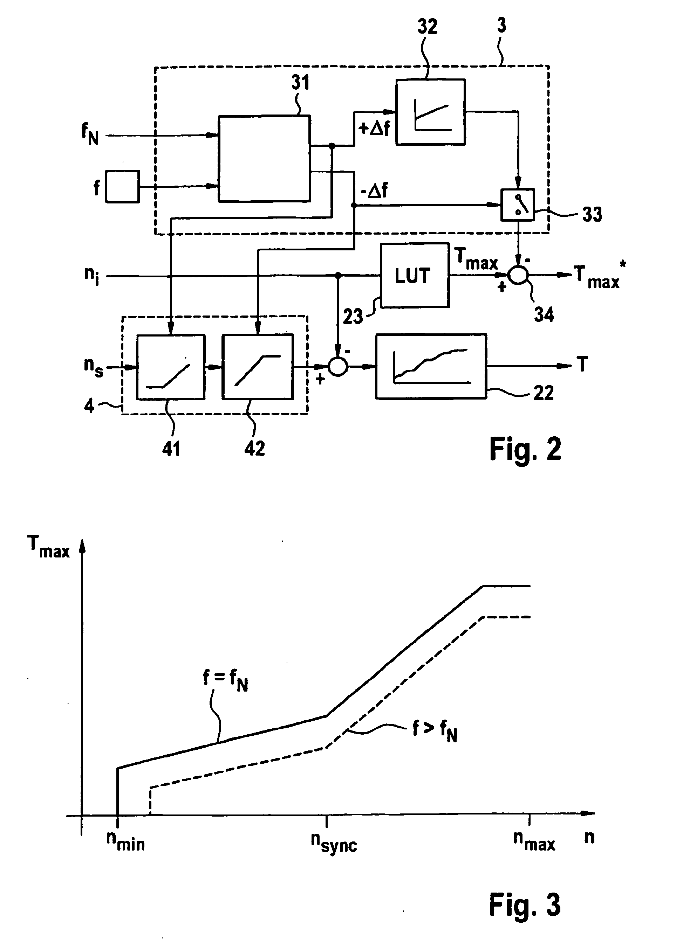

Die Steuerung 2 weist ein Element 22 zur Bestimmung eines Sollmoments T zu der mechanischen Drehzahl n und einen Grenzmomentbestimmer 23 auf, welcher zu einem angelegten Signal für eine tatsächliche Drehzahl $n_i$ ein jeweils zulässiges maximales Drehmoment $T_{max}$ bestimmt. Dieser Bestimmer kann durch eine algebraische Funktion, vorzugsweise durch eine Look-up-Tabelle (LUT) oder durch ein Kennlinienglied realisiert sein. In der Darstellung in Fig. 2 ist eine Look-up-Tabelle (LUT) für den Bestimmer 23 vorgesehen. Darin implementiert ist eine Funktion, wie sie in Fig. 3 mit durchgezogener Linie dargestellt ist. Man erkennt, dass zu jeder Drehzahl n zwischen der minimalen Betriebsdrehzahl $n_{min}$ der Windenergieanlage und der maximalen Betriebsdrehzahl $n_{max}$ jeweils ein Wert für das maximal zulässige Drehmoment $T_{max}$ zugewiesen ist. Der sich hierbei ergebende Verlauf des Maximaldrehmoments $T_{max}$ weist einen Knickpunkt bei der Synchrondrehzahl $n_{sync}$ auf.

Es wird nun Bezug genommen auf Fig. 2. Dort ist neben dem an sich bekannten Maximalmomentbestimmer 23 eine erfindungsgemäße frequenzadaptive Begrenzungseinrichtung 3 dargestellt. Sie umfasst einen Klassifikator 31, an den Eingangssignale für die Nominalfrequenz $f_N$ des Netzes 9 sowie das Messsignal eines Netzfrequenzdetektors für die tatsächlich herrschende Frequenz f angelegt sind. Der Klassifikator 31 ist dazu ausgebildet, anhand dieser Signale im Fall einer Überfrequenz ein positives Frequenzabweichungssignal $+\Delta f$ und bei dem Auftreten einer negativen Frequenzabweichung ein negatives Abweichungssignal $-\Delta f$ auszugeben. Das positive Abweichungssignal $+\Delta f$ ist angelegt an den Eingang eines Momentschiebers 32. Dieser ist dazu ausgebildet, abhängig von der Frequenzabweichung bei Überfrequenz ein Maximalmomentkorrekturwert $\Delta T_{Max}$ zu bestimmen, welcher als Ausgangssignal ausgegeben wird. Dieses Signal wird über einen im Normalzustand geschlossenen Inhibitor 33 mit negativem Vorzeichen an ein Summationsglied 34 angelegt. Damit wird das von dem Maximalmomentbestimmer 23 bestimmte maximale Drehmoment $T_{max}$ um den von dem Momentschieber 32 bestimmten Momentkorrekturwert $\Delta T_{max}$ verringert, und so ein modifizierter Maximalwert $T_{max}^*$ gebildet. Erkennt der Klassifikator 31 hingegen, dass eine Unterfrequenz auftritt, wird über das entsprechend von dem Klassifikator 31 ausgegebene Ausgangssignal der Inhibitor 33 betätigt. Damit ist eine Veränderung des Werts für das Maximaldrehmoment $T_{max}$ blockiert, so dass keine Anpassung bei Unterfrequenz erfolgt. Damit wird das Generator-/Umrichtersystem 14, 15 im Fall einer Überfrequenz in Bezug auf das Drehmoment beschränkt, und im Fall der Unterfrequenz bleibt das zulässige Maximaldrehmoment unverändert.

Weiter vorgesehen ist ein frequenzabhängiger Drehzahlbegrenzer 4. Er umfasst einen unteren Zweig 41 und einen oberen Zweig 42. An seine Eingänge sind wiederum die von dem Klassifikator 31 bestimmten Signale für positive Frequenzabweichungen und negative Frequenzabweichungen $+\Delta f$ und $-\Delta f$ angelegt. Das Signal für positive Frequenzabweichungen ist hierbei an das untere Begrenzermodul 41 angeschlossen, aber nicht an den oberen Begrenzer 42. Damit wird erreicht, dass bei dem Auftreten von Überfrequenz die untere Grenze für die Solldrehzahl erhöht wird und die obere Grenze für die Solldrehzahl $n_{max}$ unverändert bleibt. Hingegen ist ausschließlich das Abweichungssignal für Unterfrequenz an das obere Begrenzermodul 42 angeschlossen, so dass bei dem Auftreten von Unterfrequenz die obere Grenze für die Solldrehzahl $n_{max}$ abgesenkt wird und die untere Grenze für die Solldrehzahl $n_{min}$ beim Auftreten von Unterfrequenz unverändert bleibt.

Damit wird erreicht, dass der stationäre Drehzahlbereich beim Auftreten von Frequenzabweichungen angepasst wird. So wird bei dem Auftreten von Überfrequenzen die Untergrenze $n_{min}$ angehoben, und damit das Auftreten von unzulässig hohen (negativen) Schlupfwerten verhindert. Die obere Drehzahlgrenze bleibt hierbei unangetastet. Umgekehrt wird bei dem Auftreten von Unterfrequenzen die obere Drehzahlgrenze abgesenkt. Auch damit wird erreicht, dass keine unzulässig hohen (positiven) Schlupfwerte auftreten. Vorzugsweise sind die in den Begrenzermodulen 41, 42 implementierten Begrenzungsfunktionen so ausgebildet, dass die Solldrehzahl $n_s$ entsprechend der prozentualen Abweichung der tatsächlichen Netzfrequenz von der Nominalnetzfrequenz angepasst werden.

Weiter wird mit dem Momentschieber 32 und dem Inhibitor 33 erreicht, dass bei dem Auftreten von Überfrequenz das zulässige Drehmoment abgesenkt wird, während bei dem Auftreten von Unterfrequenz das maximal zulässige Drehmoment nicht verändert wird. Damit wird gewährleistet, dass auch bei dem Auftreten von Überfrequenz das schlupfabhängige Drehmomentlimit nicht überschritten wird. Der Verlauf der entsprechenden Kennlinie für das Maximalmoment und Drehzahl nach Begrenzung ist in Fig. 3 gestrichelt dargestellt.

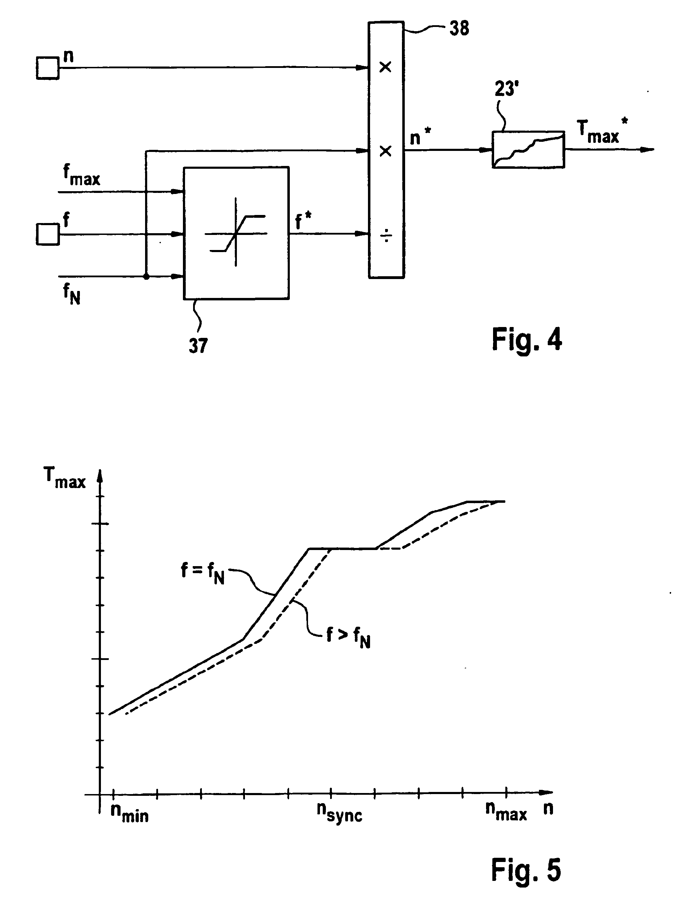

Ein zweites Ausführungsbeispiel mit der Begrenzungseinrichtung 3 ist in Fig. 4 dargestellt. Sie ist mit integrierten Komponenten versehen, und zwar einem Drehzahlmodifizierglied 38 und einem Sättigungsglied 37. Das Sättigungsglied 37 weist an seinem Eingang Eingangssignale für die von dem Netzfrequenzdetektor bestimmte tatsächliche Frequenz f, die nominale Netzfrequenz $f_N$ - und als Besonderheit - die maximal zulässige Netzfrequenz $f_{max}$ auf. Die Nominalfrequenz bildet hierbei den unteren Grenzwert und die maximal zulässige Frequenz $f_{max}$ den oberen Grenzwert des Sättigungsglieds 37. Das angelegte Messsignal für die tatsächlich herrschende Netzfrequenz f wird damit über das Sättigungsglied 37 verarbeitet und als gesättigtes Frequenzsignal f* ausgegeben. Es ist an einen Divisoreingang des Drehzahlmodifizierglieds 38 angeschlossen. Das Drehzahlmodifizierglied 38 weist ferner zwei Multiplikatoreingänge auf. An einem der Multiplikatoreingänge ist das Signal für die Nominalfrequenz $f_N$ angelegt, an den anderen Multiplikatoreingang ist ein Signal für die tatsächliche Drehzahl n des Generators 14 angelegt. Es wird nun mittels der Funktion

$$n^* = n \times \frac{f_N}{f^*}$$

ein modifiziertes Drehzahlsignal n* gebildet. Dieses modifizierte Drehzahlsignal wird an den Eingang eines Maximalmomentglieds 23' angelegt. Dieses kann wie vorstehend beschrieben ausgeführt sein, oder es kann, wie in dem in Fig. 4 dargestellten Ausführungsbeispiel, als ein Kennlinienglied ausgebildet sein. Es gibt zu dem angelegten (modifizierten) Drehzahlsignal n* den dazugehörenden Maximalwert für das zulässige Drehmoment $T_{max}$ aus. Bei dieser Ausführungsform kann auf besonders einfache und elegante Weise mittels einer Berechnung einer synthetischen Zwischengröße, nämlich des modifizierten Drehzahlsignals n*, das Erreichen beider Funktionalitäten, nämlich sowohl der Drehzahlbegrenzung wie auch der Momentbegrenzung erreicht werden. Ein Beispiel für eine entsprechende Verschiebung bei einer komplexeren Drehmomentgrenzlinie ist in Fig. 5 dargestellt (durchgezogen bei Nennfrequenz und gestrichelt bei Überfrequenz).

## Patentansprüche

**1.** Windenergieanlage mit einem Windrotor (12), einem davon angetriebenen doppelt gespeisten Asynchrongenerator (14) mit einem Umrichter (15) und einer Steuerung (2), die dazu ausgebildet ist, zu einer Betriebsdrehzahl (n) ein Betriebsmoment (T) zu bestimmen, wobei das Betriebsmoment ein Maximaldrehmoment ($T_{max}$) nicht überschreitet,
**dadurch gekennzeichnet, dass**
ein frequenzadaptiver Drehmomentbegrenzer (3) mit einem Klassifikator (31) für eine Über- bzw. Unterfrequenz, ein Momentschieber (32), der dazu ausgebildet ist, das Maximaldrehmoment ($T_{max}$) bei Frequenzabweichungen zu verringern, und ein Inhibitor (33), der den Momentschieber (32) bei Unterfrequenz blockiert, sowie
ein frequenzabhängi.ger Drehzahlbegrenzer (4) vorgesehen sind, der mit dem Klassifikator (31) derart zusammenwirkt, dass eine untere Grenzdrehzahl ($n_{min}$) nur bei Überfrequenz erhöht und eine obere Grenzdrehzahl ($n_{max}$) nur bei Unterfrequenz erniedrigt wird, vorgesehen sind.

**2.** Windenergieanlage nach Anspruch 1,
**dadurch gekennzeichnet, dass**
ein Maximalmomentglied (23) vorgesehen ist, das als ein Kennlinienglied oder eine Look-up-Tabelle ausgeführt ist.

**3.** Windenergieanlage nach Anspruch 1 oder 2,
**dadurch gekennzeichnet, dass**
ein Drehzahlmodifizierglied (38) vorgesehen ist, das dazu ausgebildet ist, aus der tatsächlichen Betriebsdrehzahl (n) ein um ein vom frequenzabweichungsabhängigen Korrekturwert verändertes modifiziertes Drehzahlsignal (n*) zu generieren, welches an ein drehzahlabhängiges Maximalmomentglied (23) angelegt ist, das den Maximalwert für die Drehzahl ausgibt.

**4.** Windenergieanlage nach Anspruch 3,
**dadurch gekennzeichnet, dass**
das Drehzahlmodifizierglied (38) mit einem Frequenzbegrenzer (37) zusammenwirkt, an dessen Eingang Signale für eine zulässige Maximalfrequenz, eine Normalfrequenz und die tatsächliche Frequenz angelegt sind.

**5.** Windenergieanlage nach einem der vorangehenden Ansprüche,
**dadurch gekennzeichnet, dass**
der Klassifikator (31) derart ausgebildet ist, dass bei einer Abweichung in einem Toleranzband die Begrenzungseinrichtung inaktiv ist.

**6.** Verfahren zum Betreiben einer Windenergieanlage mit einem Windrotor (12), einem davon angetriebenen doppelt gespeisten Asynchrongenerator (14) mit einem Umrichter (15) und einer Steuerung (2), wobei zum Steuern der Windenergieanlage zu einer Betriebsdrehzahl (n) ein Betriebsmoment (T) bestimmt wird, wobei das Betriebsmoment ein Maximaldrehmoment ($T_{max}$) nicht übersteigt, und eine Netzfrequenz (f) bestimmt wird,
**gekennzeichnet durch**
Bestimmen einer Frequenzabweichung und Klassifizieren in eine Über- oder Unterfrequenz,
Verringern des Maximaldrehmoments ($T_{max}$) in Abhängigkeit von der Frequenzabweichung, wobei dies bei Unterfrequenz unterdrückt wird, und
Begrenzen der Drehzahl in Abhängigkeit von der erkannten Frequenzabweichung derart, dass beim Auftreten von Überfrequenz nur die untere Grenzdrehzahl angehoben wird und bei dem Auftreten von Unterfrequenz nur die obere Grenzdrehzahl erniedrigt wird.

**7.** Verfahren nach Anspruch 6,
**dadurch gekennzeichnet, dass**
eine Begrenzungseinrichtung nach einem der Ansprüche 2 bis 5 verwendet wird.

## Claims

**1.** A wind turbine having a wind rotor (12), a double-fed induction generator (14) driven thereby with a converter (15) and a control unit (2), which is designed to determine a running torque (T) at a running speed (n), the running torque not exceeding a maximum torque ($T_{max}$),
**characterised in that**
there are provided a frequency-adaptive torque limiter (3) with a classifier (31) for an over- or underfrequency, a torque shifter (32) designed to reduce maximum torque ($T_{max}$) in the event of frequency deviations, and an inhibitor (33), which blocks the torque shifter (32) in the event of underfrequency, as well as
a frequency-dependent speed limiter (4), which cooperates with the classifier (31) in such a way that a lower limit speed ($n_{min}$) is increased only in the event of overfrequency and an upper limit speed ($n_{max}$) is reduced only in the event of underfrequency.

**2.** A wind turbine according to claim 1, **characterised in that** a maximum torque element (23) is provided, which takes the form of a characteristic element or a look-up table.

3. A wind turbine according to claim 1 or claim 2, **characterised in that** a speed modifier element (38) is provided, which is designed to generate from the actual running speed (n) a modified speed signal (n*) changed by a frequency deviation-dependent correction value, which modified speed signal is applied to a speed-dependent maximum torque element (23) which outputs the maximum speed value.

4. A wind turbine according to claim 3, **characterised in that** the speed modifier element (38) cooperates with a frequency limiter (37), to the input of which are applied signals for a permissible maximum frequency, a normal frequency and the actual frequency.

5. A wind turbine according to any one of the preceding claims, **characterised in that** the classifier (31) is designed such that the limiting device is inactive in the event of deviation within a tolerance band.

6. A method of operating a wind turbine having a wind rotor (12), a double-fed induction generator (14) driven thereby with a converter (15) and a control unit (2), a running torque (T) being determined for controlling the wind turbine at a running speed (n), the running torque not exceeding a maximum torque ($T_{max}$), and a supply frequency (f) being determined, **characterised by** determining a frequency deviation and classifying it as an over- or underfrequency, reducing the maximum torque ($T_{max}$) as a function of the frequency deviation, this being suppressed in the event of underfrequency, and limiting the speed as a function of the detected frequency deviation, such that, in the event of overfrequency, only the lower limit speed is raised and in the event of underfrequency only the upper limit speed is lowered.

7. A method according to claim 6, **characterised in that** a limiting means according to any one of claims 2 to 5 is used.

## Revendications

1. Eolienne comprenant un rotor à vent (12), un générateur asynchrone (14) alimenté doublement, entraîné par celui-ci avec un convertisseur (15) et une commande (2) qui est réalisée afin de déterminer un couple de fonctionnement (T) pour une vitesse de rotation de fonctionnement (n), le couple de fonctionnement ne dépassant pas un couple de rotation maximal ($T_{max}$),
**caractérisée en ce que**
il est prévu un limiteur de couple (3) à fréquence adaptative avec un classificateur (31) pour une hyperfréquence ou sous-fréquence, un dispositif de décalage du couple (32) qui est réalisé afin de diminuer le couple de rotation maximal ($T_{max}$) en cas d'écarts de fréquence, et un inhibiteur (33) qui bloque le dispositif de décalage du couple (32) en cas de sous-fréquence, ainsi que
un limiteur de vitesse de rotation (4) dépendant de la fréquence qui coagit avec le classificateur (31) de telle manière qu'une vitesse de rotation limite inférieure ($n_{min}$) ne soit augmentée qu'en cas d'hyperfréquence et une vitesse de rotation limite supérieure ($n_{max}$) ne soit abaissée qu'en cas de sous-fréquence.

2. Eolienne selon la revendication 1,
**caractérisée en ce que**
un élément de couple maximal (23) est prévu, lequel est réalisé comme un élément de courbe caractéristique ou une table de correspondance.

3. Eolienne selon la revendication 1 ou 2
**caractérisée en ce que**
un élément de modification de la vitesse de rotation (38) est prévu, lequel est réalisé afin de générer à partir de la vitesse de rotation de fonctionnement (n) réelle, un signal de vitesse de rotation (n*) modifié, varié d'un par rapport à la valeur de correction dépendant de l'écart de fréquence, lequel signal est appliqué à un élément de couple maximal (23) dépendant de la vitesse de rotation, qui émet la valeur maximale pour la vitesse de rotation.

4. Eolienne selon la revendication 3,
**caractérisée en ce que**
l'élément de modification de la vitesse de rotation (38) coagit avec un limiteur de fréquence (37), à l'entrée duquel des signaux sont appliqués pour une fréquence maximale autorisée, une fréquence normale et la fréquence réelle.

5. Eolienne selon l'une quelconque des revendications précédentes,
**caractérisée en ce que**
le classificateur (31) est réalisé de telle manière que le dispositif de limitation soit inactif en cas d'écart dans une bande de tolérance.

6. Procédé de fonctionnement d'une éolienne avec un rotor à vent (12), un générateur asynchrone (14) alimenté doublement, entraîné par celui-ci avec un convertisseur (15) et une commande (2), dans lequel pour la commande de l'éolienne, un couple de fonctionnement (T) est déterminé pour une vitesse de rotation de fonctionnement (n), dans lequel le couple de fonctionnement ne dépasse pas un couple de rotation maximal ($T_{max}$), et une fréquence de réseau (f) est déterminée,

**caractérisé par**
la détermination d'un écart de fréquence et de la classification en une hyperfréquence ou sous-fréquence,
la diminution du couple de rotation maximal ($T_{max}$) en fonction de l'écart de fréquence, dans lequel celui-ci est supprimé en cas de sous-fréquence, et
la limitation de la vitesse de rotation en fonction de l'écart de fréquence reconnu de telle manière que lors de l'apparition d'une hyperfréquence, seule la vitesse de rotation limite inférieure est augmentée et lors de l'apparition de la sous-fréquence, seule la vitesse de rotation limite supérieure est abaissée.

**7.** Procédé selon la revendication 6,
**caractérisé en ce que**
un dispositif de limitation selon l'une quelconque des revendications 2 à 5 est utilisé.

14
15
21
12
2
11
13
10
17
9
16

Fig. 1

32
3
31
$f_N$
+Δf
f
-Δf
33
$n_i$
LUT
$T_{max}$
-
+
$T_{max}^*$
23
34
$n_s$
+
-
T
4
22
41
42

Fig. 2

$T_{max}$
$f = f_N$
$f > f_N$
$n_{min}$
$n_{sync}$
$n_{max}$
n

Fig. 3

n
38
23'
$T_{max}^*$
$n^*$
$f_{max}$
f
$f^*$
$f_N$
37

Fig. 4

$T_{max}$
$f = f_N$
$f > f_N$
$n_{min}$
$n_{sync}$
$n_{max}$
n

Fig. 5

## IN DER BESCHREIBUNG AUFGEFÜHRTE DOKUMENTE

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

### In der Beschreibung aufgeführte Patentdokumente


- US 2007069522 A1